# EUROPÄISCHE PATENTSCHRIFT

(11) **EP 2 157 672 B1**
(45) Veröffentlichungstag und Bekanntmachung des Hinweises auf die Patenterteilung: **23.03.2016**
(21) Anmeldenummer: 09010493.6
(22) Anmeldetag: 14.08.2009
(51) Int. Cl.: H02B 1/42, H02B 1/20

(54) **Verteilerkasten**
Distributor boxes
Boîtier de distribution

(30) Priorität: 22.08.2008 DE 102008039382
(43) Veröffentlichungstag der Anmeldung: 24.02.2010
(73) Patentinhaber: Hager Electro GmbH & Co. KG, 66131 Saarbrücken (DE)
(72) Erfinder: Theuer, Markus, 66131 Saarbrücken (DE); Prat, Julio Milà, 08402 Granollers (ES); Nunez, Sergi Tornos, 08520 Les Franqueses del Vallès (ES)
(74) Vertreter: Nuss, Laurent

(56) Entgegenhaltungen:
- EP-A2- 1 724 896
- WO-A1-2004/109883
- US-A- 4 998 343
- US-A- 5 073 841
- US-A1- 2002 131 751
- US-B1- 6 327 139

## Beschreibung

Die Erfindung betrifft einen Verteilerkasten mit wenigstens einem Ösenelement zur Bildung einer Kabelführung für ein Kabelbündel und mit Einrichtungen zur Anbringung des Ösenelements an dem Verteilerkasten unter Bildung einer solchen Kabelführung außerhalb des Verteilerkastens.

Verteilerkästen mit Ösenelementen zur Bildung einer Kabelführung, die entlang der Inneriseite einer vertikalen Kastenseitenwand oder parallel zu einer sich horizontal erstreckenden Hutprofilträgerschiene verläuft, sind u.a. dur ch Benutzung bekannt. Die Kabelführungen erlauben eine geordnete und übersichtliche Verlegung der zumeist zahlreichen, innerhalb von Verteilerkästen unterzubringenden Leitungen und erleichtern die Montagearbeiten an den Verteilerkästen.

Ein Verteilerkasten der eingangs genannten Art geht aus der US 6,327,139 B1 hervor. Eine mehrere Ösenabschnitte umfassende Führungseinrichtung für ein Kabelbündel ist aus einem Verteilerkasten heraus ausschwenkbar, sodass das geführte Kabelbündel durch die Führungseinrichtung aus dem Verteilerkasten heraus und wieder hinein geführt wird. Die Führungseinrichtung erleichtert Montagearbeiten im Verteilerkasten.

Der Erfindung liegt die Aufgabe zugrunde, einen neuen Verteilerkasten der eingangs erwähnten Art zu schaffen, der eine weitere Erleichterung der Durchführung von Montagearbeiten ermöglicht.

Der diese Aufgabe lösende Verteilerkasten nach der Erfindung ist dadurch gekennzeichnet, dass das Ösenelement mit Hilfe der Einrichtungen an einer Vertikalseite des Verteilerkasten an dem Verteilerkasten anbringbar ist und dass die dadurch außerhalb des Verteilerkastens gebildete Führung eine geordnete Verlegung dem Verteilerkasten von oben zugeführter Kabel vorbei an dem Verteilerkasten und damit frei von Behinderungen des Zugangs zu dem Verteilerkasten erlaubt.

Vorteilhaft lassen sich durch solche äußeren Kabelführungen an den Verteilerkasten von oben heranführende Leitungen während Montagearbeiten geordnet außerhalb des Kastens verlegen und festhalten, so dass sie den Zugang zum Verteilerkasten nicht behindern. Insbesondere können von oben herabhängende Leitungen gebündelt seitlich am Kasten vorbeigeführt und vorübergehend befestigt werden.

In vorteilhafter Ausgestaltung der Erfindung ist das Ösenelement zur Bildung der Kabelführung außerhalb des Kastens gegenüber einer ersten Position, in der das Ösenelement eine Kabelführung innerhalb des Kastens bildet, um 180° verdreht oder etwa um die Ösenweite versetzt am Verteilerkasten anbringbar. Vorteilhaft können Ösenelemente sowohl für die Bildung einer äußeren als auch einer inneren Kabelführung genutzt werden.

Zweckmäßig umfassen die Einrichtungen zur Anbringung des Ösenelements an dem Verteilerkasten eine vom Verteilerkastenboden oder einer Verteilerkastenseitenwand vorstehende Verbindungseinrichtung.

Vorzugsweise lässt sich das Ösenelement auf die Verbindungseinrichtung aufstecken, wobei das Ösenelement insbesondere an der Verbindungseinrichtung einrastet. Vorteilhaft kann das Ösenelement so mit geringem Aufwand z.B. von einer Position, in der es eine innere Kabelführung bildet, in eine Position, in der es eine äußere Kabelführung bildet, versetzt werden.

In einer bevorzugten Ausführungsform der Erfindung ist das Ösenelement teilweise offen mit zwei, jeweils ein freies Ende aufweisenden Schenkeln ausgebildet.

Vorzugsweise ist das Ösenelement über wenigstens einen der beiden Schenkel an der Verbindungseinrichtung anbringbar.

In der bevorzugten Ausführungsform der Erfindung ist die Verbindungseinrichtung als insbesondere flache, am Kastenbodenseitenrand angeordnete Stecktasche ausgebildet. Es versteht sich, dass ein z.B. U-förmiges Verbindungselement mit zwei Schenkeln eine innere Kabelführung und in einer um 180° verdrehten oder um den Abstand zwischen den Schenkeln versetzten Stellung eine äußere Kabelführung bilden kann.

In weiterer Ausgestaltung der Erfindung weisen die Schenkel Segmente bildende Sollbruchstellen auf, so dass sich die Schenkellänge segmentweise verringern lässt. Die Ösenelemente können so mit geringem Aufwand an unterschiedliche Q Querschnittsgrößen verlegter Kabelbündel angepasst werden. An einem der Schenkel kann jedes Segment mit Einrichtungen zur Einrastung des Schenkels an der Verbindungseinrichtung vorgesehen sein, wobei ein solches Rastelement vorzugsweise zweifach auf gegenüberliegenden Seiten des Segments gebildet ist, so dass in beiden um 180° verschiedenen Drehstellungen eine Einrastung erfolgen kann.

In weiterer Ausgestaltung der Erfindung ist die Verbindungseinrichtung mit einer Öffnung für die Durchführung eines Kabelbinderstrangs versehen. Vorteilhaft lassen sich auf diese Weise, insbesondere am Kastenbodenrand angeordnete, Verbindungseinrichtungen als Träger für Kabelbinderschlaufen nutzen.

Die Erfindung wird nachfolgend anhand von Ausführungsbeispielen und der beiliegenden, sich auf diese Ausführungsbeispiele beziehenden Zeichnungen weiter erläutert. Es zeigen:
- Fig. 1: einen erfindungsgemäßen Verteilerkasten in einer Vorderansicht,
- Fig. 2: eine perspektivische Teilansicht des Verteilerkastens von Fig. 1,
- Fig. 3: ein in dem Verteilerkasten von Fig. 1 verwendetes Ösenelement,
- Fig. 4: eine weitere perspektivische Teilansicht des Verteilerkastens von Fig. 1,
- Fig. 5: eine Teilschnittansicht des Verteilerkastens von Fig. 1,
- Fig. 6: eine der Teilschnittansicht von Fig. 5 entsprechende Ansicht mit einem verkürzten Ösenelement, und
- Fig. 7: einen Verteilerkasten nach der Erfindung, in dem eine zur Verbindung mit einem Ösenelement vorgesehene Verbindungseinrichtung als Halter für einen Kabelbinder dient.

Ein Verteilerkasten umfasst einen Boden 1 aus Kunststoff, der einstückig mit einer unteren horizontalen Seitenwand 2 und einer oberen horizontalen Seitenwand 3 verbunden ist. Auf den Kastenboden 1 ist eine nicht gezeigte, im Wesentlichen die vertikalen Seitenwände bildende Deckelhaube aufsetzbar.

Auf dem Kastenboden sind Hutprofilschienen 4 und 5 für die Aufnahme von Schaltgeräten angebracht. Verschiedene, hier nicht näher beschriebene, teilweise durch Sollbruchstellen herstellbare Öffnungen im Kastenboden 1 und den Seitenwänden 2 und 3 dienen der Befestigung des Kastens an einer Trägerwand sowie der Durchführung von Kabeln.

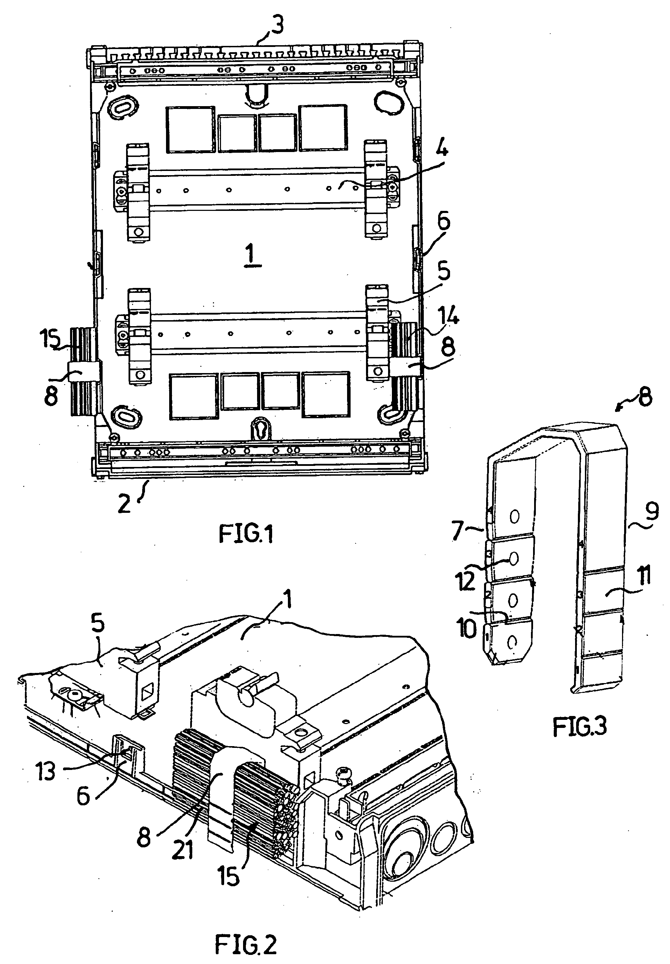

An den vertikalen Rändern des Kastenbodens 1 sind jeweils drei flache Stecktaschen 6 gebildet, in welche ein Schenkel 7 eines in Fig. 3 gesondert dargestellten, etwa U-förmigen Ösenelements 8 einsteckbar ist.

Der Schenkel 7 wie auch ein zweiter Schenkel 9 des Ösenelements 8 weisen Sollbruchstellen 10 auf, durch die Segmente 11 gebildet sind. An jedem der Segmente 11 des Schenkels 7 befindet sich auf einander gegenüberliegenden Seiten jeweils eine Rastnase 12. Die flachen, am Kastenbodenrand angeordneten Stecktaschen 6 weisen jeweils eine die Rastnase 12 aufnehmende Rastöffnung 13 auf (Fig. 2).

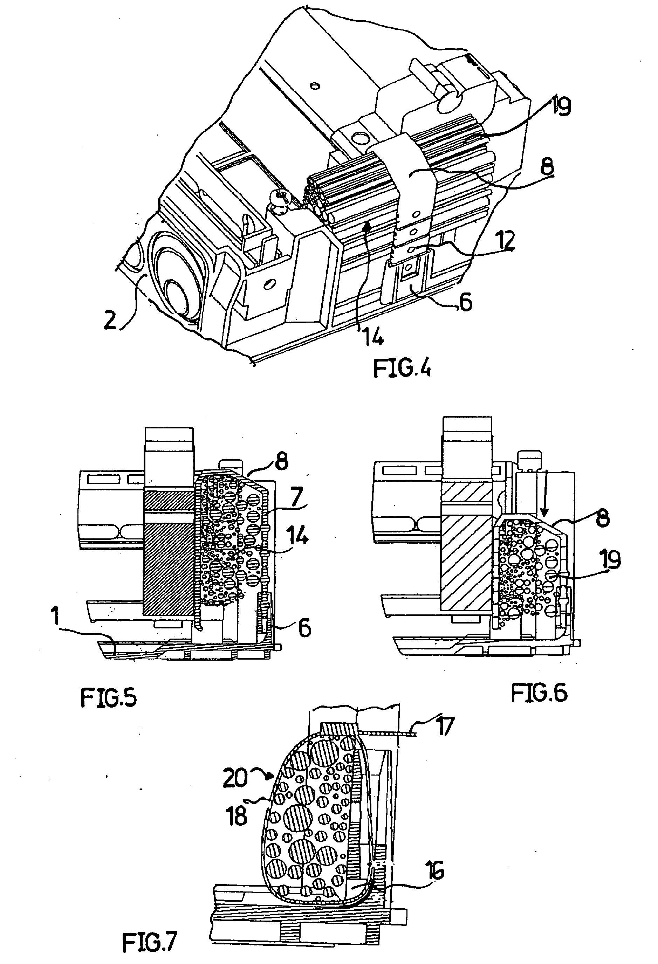

Wie aus den Figuren 4 und 5 hervorgeht, lässt sich mit Hilfe des Ösenelements 8 im Verteilerkasten eine Führung 14 für innerhalb des Verteilerkastens verlaufende Kabel 19 bilden, indem das Ösenelements 8 mit dem Schenkel 7 in einer solchen Drehstellung in eine der Taschen 6 eingesteckt wird, dass der andere Schenkel 9 nach innen weist.

Durch Drehung des Ösenelements 8 um 180° und durch Einstecken des Schenkels 7 in der gedrehten Stellung in eine der Taschen 6 lässt sich eine in den Fig. 1 und 2 gezeigte, auf der Außenseite des Verteilerkastens verlaufende Kabelführung 15 bilden. Diese Kabelführung 15 lässt sich vorteilhaft während Montagearbeiten an dem Verteilerkasten 1 dafür nutzen, dem Verteilerkasten von oben, insbesondere von der Decke, zugeführte Kabel 21 vorübergehend geordnet am Kasten vorbei zu verlegen, sodass sie den Zugang zum Kasten und damit die Montagearbeiten nicht behindern.

Wie aus Fig. 6 hervorgeht, lässt sich die Querschnittsfläche des Ösenelements 8 an die Menge der zu führenden Kabel 19 anpassen. Hierzu werden Segmente 11 entfernt und die Schenkel 7 und 9 entsprechend verkürzt. Indem jedes der Segmente 11 auf beiden Seiten eine Rastnase 13 aufweist, rasten auch die verkürzten Schenkel in der Stecktasche 6 ein.

Wie aus Fig. 7 hervorgeht, weisen die Stecktaschen 6 bei 16 eine Öffnung auf, durch welche hindurch ein Kabelbinderstrang 17 geführt und eine Führungsöse 18 für eine innerhalb des Kastens verlaufende Kabelführung 20 gebildet werden kann.

## Patentansprüche

1. Verteilerkasten mit wenigstens einem Ösenelement (8) zur Bildung einer Führung (14,15) für ein Kabelbündel (19,21) und mit Einrichtungen zur Anbringung des Ösenelements (8) an dem Verteilerkasten unter Bildung einer solchen Kabelführung (15) außerhalb des Verteilerkastens,
**dadurch gekennzeichnet,**
**dass** das Ösenelement (8) mit Hilfe der Einrichtungen an einer Vertikalseite des Verteilerkastens anbringbar ist und dass die dadurch außerhalb des Verteilerkastens gebildete Kabelführung (15) eine geordnete Verlegung dem Verteilerkasten von oben zugeführter Kabel an dem Verteilerkasten vorbei und damit frei von Behinderungen des Zugangs zum Verteilerkasten erlaubt.

2. Verteilerkasten nach Anspruch 1,
**dadurch gekennzeichnet,**
**dass** das Ösenelement (8) zur Bildung der Kabelführung (15) außerhalb des Kastens gegenüber einer ersten Position, in der das Ösenelement (8) eine Kabelführung (14) innerhalb des Kastens bildet, um 180° verdreht oder um die Ösenweite versetzt am Verteilerkasten anbringbar ist.

3. Verteilerkasten nach Anspruch 1 oder 2,
**dadurch gekennzeichnet,**
**dass** die Einrichtungen zur Anbringung des Ösenelements (8) an dem Verteilerkasten eine vom Kastenboden (1) oder einer Kastenseitenwand vorstehende Verbindungseinrichtung (6) umfassen.

4. Vertellerkasten nach Anspruch 3,
**dadurch gekennzeichnet,**
**dass** das Ösenelement (8) auf die Verbindungseinrichtung (6) aufsteckbar ist.

5. Verteilerkasten nach Anspruch 3 oder 4,
**dadurch gekennzeichnet,**
**dass** das Ösenelement (8) an der Verbindungseinrichtung (6) einrastet.

6. Verteilerkasten nach einem der Ansprüche 1 bis 5,
**dadurch gekennzeichnet,**
**dass** das Ösenelement (8) teilweise offen mit zwei, jeweils ein freies Ende aufweisenden Schenkeln (7,9) ausgebildet ist.

7. Verteilerkasten nach Anspruch 6,
**dadurch gekennzeichnet,**
**dass** das Ösenelement (8) über wenigstens einen der beiden Schenkel (7,9) an der Verbindungseinrichtung (6) anbringbar ist.

8. Verteilerkasten nach Anspruch 6 oder 7,
**dadurch gekennzeichnet,**
**dass** die Schenkel (7,9) Segmente (11) bildende Sollbruchstellen (10) aufweisen, so dass sich die Schenkellänge segmentweise verringern lässt.

9. Verteilerkasten nach Anspruch 8,
**dadurch gekennzeichnet,**
**dass** an jedem Segment (11) von einem der Schenkel (7) Einrichtungen (12) zur Einrastung des Schenkels (7) an der Verbindungseinrichtung (6) vorgesehen sind.

10. Verteilerkasten nach einem der Ansprüche 3 bis 9,
**dadurch gekennzeichnet,**
**dass** die Verbindungseinrichtung (6) eine Öffnung (16) für die Durchführung eines Kabelbinderstrangs (17) aufweist.

## Claims

1. Distributor box with at least one eyelet element (8) for forming a guide (14,15) for a cable bundle (19,21) and with fittings for attaching the eyelet element (8) to the distributor box thereby forming such a cable guide (15) outside the distributor box,
**characterised in that**
the eyelet element (8) can be attached to a vertical side of the distributor box using the fittings and that the cable guide (15) formed thereby outside the distributor box allows cables fed to the distributor box from above to be placed to bypass said distributor box in an orderly fashion, thus providing no obstacles in gaining access to the distributor box.

2. Distributor box according to claim 1,
**characterised in that**,
in order to form the cable guide (15), the eyelet element (8) can be attached to the distributor box outside the box, rotated by 180° or displaced by the width of the eyelet, with respect to a first position, in which the eyelet element (8) forms a cable guide (14) inside the box.

3. Distributor box according to claim 1 or 2,
**characterised in that**
the fittings for attaching the eyelet element (8) to the distributor box comprise a connecting fitting (6) projecting from the box base (1) or a box side wall.

4. Distributor box according to claim 3,
**characterised in that**
the eyelet element (8) can be mounted on to the connecting fitting (6).

5. Distributor box according to claim 3 or 4,
**characterised in that**
the eyelet element (8) latches onto the connecting fitting (6).

6. Distributor box according to one of the claims 1 to 5,
**characterised in that**,
the eyelet element (8) is formed to be partially open with two legs (7,9) each having a free end.

7. Distributor box according to claim 6,
**characterised in that**
the eyelet element (8) can be attached by at least one of the two legs (7,9) to the connecting fitting (6).

8. Distributor box according to claim 6 or 7,
**characterised in that**
the legs (7,9) have predetermined breaking points (10) forming segments (11), so that the length of the legs can be shortened segment by segment.

9. Distributor box according to claim 8,
**characterised in that**
means (12) to latch the leg (7) to the connecting fitting (6) are provided at each segment (11) of one of the legs (7).

10. Distributor box according to one of the claims 3 to 9,
**characterised in that**
the connecting fitting (6) has an opening (16) through which a cable tie (17) can be passed.

## Revendications

1. Boîtier de distribution comportant au moins un élément en oeillet (8) destiné à former un guide (14, 15) pour un faisceau de câbles (19, 21) ainsi que des moyens pour fixer l'élément en oeillet (8) sur le boîtier de distribution en formant un tel guide de câbles (15) à l'extérieur du boîtier de distribution,
**caractérisé en ce**
**que** l'élément en oeillet (8) peut être fixé sur un côté vertical du boîtier de distribution à l'aide desdits moyens et que le guide de câbles (15) ainsi formé à l'extérieur du boîtier de distribution permet une pose ordonnée contournant le boîtier de distribution, de câbles amenés au boîtier de distribution par le haut et ainsi un accès sans obstacles au boîtier de distribution.

2. Boîtier de distribution selon la revendication 1,
**caractérisé en ce**
**que** l'élément en oeillet (8) destiné à former le guide de câbles (15) à l'extérieur du boîtier peut être fixé sur le boîtier de distribution tourné de 180° ou décalé de la largeur de l'oeillet par rapport à une première position dans laquelle l'élément en oeillet (8) forme un guide de câbles (14) à l'intérieur du boîtier.

3. Boîtier de distribution selon la revendication 1 ou la revendication 2,
**caractérisé en ce**
**que** les moyens permettant la fixation de l'élément en oeillet (8) sur le boîtier de distribution comprennent un moyen de liaison (6) faisant saillie du fond du boîtier (1) ou d'une paroi latérale du boîtier.

4. Boîtier de distribution selon la revendication 3,
**caractérisé en ce**
**que** l'élément en oeillet (8) peut être emboîté sur le moyen de liaison (6).

5. Boîtier de distribution selon la revendication 3 ou la revendication 4, **caractérisé en ce**
**que** l'élément en oeillet (8) s'enclenche sur le moyen de liaison (6).

6. Boîtier de distribution selon l'une des revendications 1 à 5,
**caractérisé en ce**
**que** l'élément en oeillet (8) est réalisé de manière partiellement ouverte avec deux branches (7, 9) présentant chacune une extrémité libre.

7. Boîtier de distribution selon la revendication 6,
**caractérisé en ce**
**que** l'élément en oeillet (8) peut être fixé au moyen de liaison (6) par au moins l'une des deux branches (7, 9).

8. Boîtier de distribution selon la revendication 6 ou la revendication 7, **caractérisé en ce**
**que** les branches (7, 9) présentent des zones de rupture (10) formant des segments (11), de sorte que la longueur des branches peut être diminuée par segments.

9. Boîtier de distribution selon la revendication 8,
**caractérisé en ce**
**que** sur chaque segment (11) d'une des branches (7) sont prévus des moyens (12) permettant d'enclencher la branche (7) sur le moyen de liaison (6).

10. Boîtier de distribution selon l'une des revendications 3 à 9,
**caractérisé en ce**
**que** le moyen de liaison (6) présente une ouverture (16) pour le passage d'un brin de serre-câbles (17).
